(19) Europäisches Patentamt
European Patent Office
Office européen des brevets

(11) **EP 3 511 901 A1**

(12) **EUROPEAN PATENT APPLICATION**

(43) Date of publication:
**17.07.2019 Bulletin 2019/29**

(51) Int Cl.:
***G06T 7/00*** *(2017.01)*

(21) Application number: **18151868.9**

(22) Date of filing: **16.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Universität Bern**
**3012 Bern (CH)**

(72) Inventors:
• **BARROS, Nuno**
**3007 Bern (CH)**
• **SLOTBOOM, Johannes**
**3126 Kaufdorf (CH)**

(74) Representative: **Veni**
**Swiss & European Patent Attorneys**
**Villa de Meuron**
**Buristrasse 21**
**3006 Bern (CH)**

(54) **METHOD OF RENDERING SPATIALLY-CORRELATED IMAGE DATA**

(57) A method is disclosed of rendering a map of tumor-indicating feature parameters, such as metabolite ratios, in MR spectroscopy images by representing the degree of tumor infiltration using a novel parameter, the Expected Distance to Tumor (EDT). The boundary of a tumor 31 is detected on a structural MRI image, and metabolite ratios are extracted from corresponding MRSI datasets. A trained regression model is used to estimate the EDT for each image element, on the basis of a multivariate feature vector comprising the metabolite ratios, and the Expected Distance to Tumor values for each image element are rendered on an EDT map 30. If the map shows image elements (region 37) with a significantly smaller EDT value than the actual distance from the tumor, then these image elements indicate regions of tumor infiltration. The method of estimating a quantity of interest by predicting an expected distance value may be applied in other technical imaging fields.

**Fig. 3a**

EP 3 511 901 A1

## Description

Field of the invention

The invention relates to computer methods for recognizing patterns of spatially-correlated parameter values of image elements in an image dataset. In particular, but not exclusively, the invention relates to the computer-assisted estimation of a quantity of interest, such as the degree of tumor infiltration in a peritumoral region outside a tumor boundary, based on feature patterns derived from magnetic resonance spectroscopy datasets.

Background of the invention

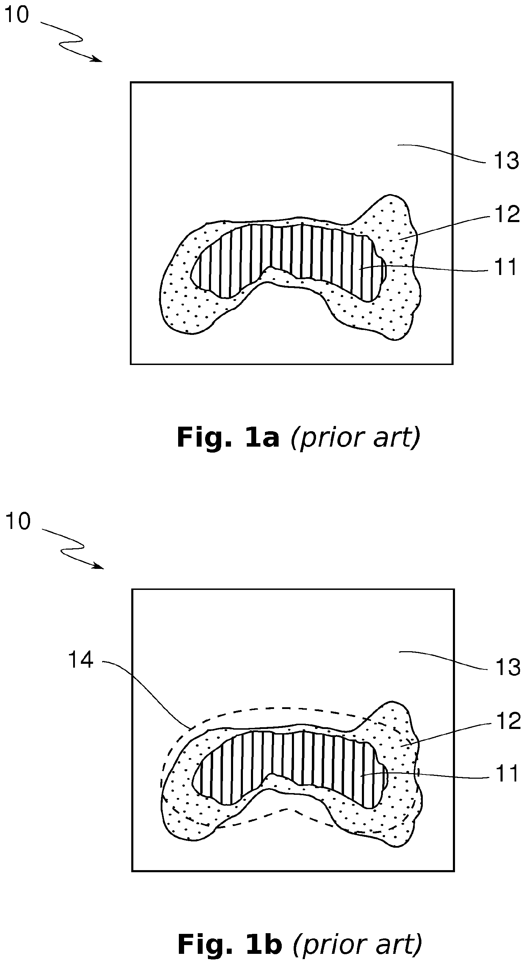

Arrays of image elements (e.g. pixels, voxels) are used in many fields to represent the spatial distribution of physical, chemical and other phenomena. In the following description, the example will be used of medical imaging of brain tumors. However, it should be understood that the techniques described can be applied in other fields. The invention will be described with reference to the particular example of magnetic resonance imaging (MRI) of glioblastoma multiforme (GBM). GBM is a particularly aggressive, infiltrative type of tumor of the human brain, which requires rapid and comprehensive intervention. GBM may be treated using radiotherapy or surgery to destroy or remove the tumorous tissue. Structural magnetic resonance imaging (sMRI) is typically used to analyze the spatial extent of the tumor. However, the full spatial extent of certain infiltrative tumors, such as GBM, is not visible in sMRI. Figures 1a and 1b show a simplified representation of a conventional sMRI image of a GBM tumor. The image shows a region 11 which represents the solid tumor volume (STV) - this region 11 is sometimes referred to as the MRI-visible solid tumor. The STV is surrounded by edema 12 and normal-appearing brain tissue (NABT) 13. Clinical guidelines for radiotherapy recommend treating a region of tissue which includes a margin 14 outside the MRI-visible tumor boundary, in order to increase the probability of eliminating all tumor cells. However, the larger the margin, the greater the destruction of healthy tissue. The recommended margin may be 20mm, for example. The size of the margin 14 is based on a conservative comparison of the probability of leaving some tumor-infiltrated tissue untreated, in which case the tumor will continue to spread, against the prognosis of the patient surviving the treatment with the least possible neurological deficit. However, tumor infiltration is often not uniform, so there may be regions of infiltration which extend beyond the treatment margin. There may also be regions inside the treatment margin 14 which have no tumor cells. When planning treatment of a brain tumor, it is crucial to be able to delineate the tumor and identify tumor tissue correctly.

Prior art

US20140148679A1 describes a method of adapting a treatment margin based on information available in the structural MRI image. The radial variation of signal intensity at the boundary at a particular point, or the degree of irregularity of the boundary at the point, may be used to vary the radial depth of the margin. The method outputs a tumor boundary, but does not provide anyway of recognizing patterns found further from the tumor, such as those which indicate healthy tissue, or patterns found within the tumor, such as those which indicate tumor necrosis.

WO2009058915A1 describes clustering methods in which MRI and magnetic resonance spectroscopy (MRS) image data are used, with a histology database, for segmenting cancerous tissue. The various individual embodiments each use a particular combination of MRS features to perform a particular segmentation task, based on the particular parameters, and involve a bespoke, complex training or clustering and pruning phase.

Brief description of the invention

The present invention aims to overcome at least some of the disadvantages of the prior art. To this end, a model-generating method is described in claim 1, a method of using the model is described in claim 12, and a computer program product is described in claim 15. Further variants of the invention are described in the dependent claims. By providing a common intermediate correlation parameter (distance to tumor in the example application) against which multiple diverse features (e.g. Cho/NAA, Cho/Cr metabolite ratios etc) can be correlated, and which itself correlates with the quantity of interest (e.g. degree of tumor infiltration), the method described here provides a simpler, faster and more versatile way of determining, and optionally rendering, the spatial distribution of the quantity of interest (QoI) without the need for calculating specific correlation relations between the QoI and the features. The method also facilitates the addition of other, diverse features which may be available from different sources. It is simpler to model distance functions for each additional feature than to characterize a direct correlation between the additional feature and the QoI. If a regression forest is used, the pertinence of the additional feature will be automatically adjusted; features which correlate less well with the distance to tumor are represented less strongly in the model, so it is possible to add features without introducing distortions. An additional advantage is that, as in the GBM example of tumor infiltration, the QoI may have a well-defined clinical meaning, but may not be easy to define in terms of physical characteristics, so the substitution of the Expected Distance parameter in its stead enables the spatial distribution of the QoI to be effectively rendered without the need for a numerical solution for the QoI itself. In the particular example of MRS imaging of a tumor such as GBM, the technique enables a clinician to detect signs of tumor infiltration earlier and more easily, and to improve and simplify the interpretation of MRSI examination results.

The invention will be described in detail with reference to the attached drawings, in which:

Figures 1a and 1b show a schematic representation of a conventional sMRI image of a tumor.

Figure 2 shows a schematic representation of a distance-to-tumor map of the peritumoral region of the tumor of figure 1.

Figures 3a and 3b show a schematic representation of an Expected Distance to Tumor (EDT) map which may be generated using a method according to the invention.

Figure 4 shows an example method of creating a model according to the invention.

Figure 5 shows an example method of generating an EDT map according to the invention.

It should be noted that the figures are provided merely as an aid to understanding the principles underlying the invention, and should not be taken as limiting the scope of protection sought. Where the same reference numbers are used in different figures, these are intended to indicate similar or equivalent features. It should not be assumed, however, that the use of different reference numbers is intended to indicate any particular degree of difference between the features to which they refer.

Detailed description of the invention

The invention will be described with reference to the example application of identifying tumor infiltration in the peritumoral region of a brain tumor such as a glioblastoma multiforme (GBM). The techniques described here can be applied in other imaging fields in which a quantity of interest (QoI) can be represented in terms of an expected distance from a reference point or region of an image, and in which one or more predictor variables of the QoI also vary (and may vary according to different spatial relationships) with the distance from the reference point or region.

As discussed above, figures 1a and 1b show a schematic illustration of a structural MRI image of a GBM tumor. The solid tumor volume (STV), as identified by conventional segmentation of the sMRI dataset, is indicated by 11. The STV is surrounded by edema 12 and normal-appearing brain tissue (NABT) 13. The conventional recommended treatment margin is shown as dashed line 14.

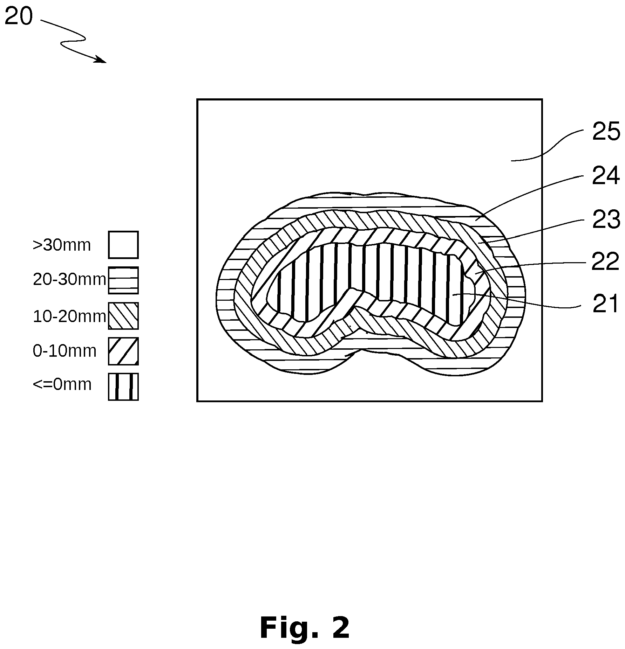

Figure 2 shows an approximate schematic of a distance-to-tumor map corresponding to the tumor of figure 1. In this example, four distances are displayed in addition to the STV itself. The STV is represented by distance <= 0mm, indicated by reference 21. The four distance bands in this example are 0-10mm (22), 10-20mm (23), 20-30mm (24) and >30mm (25). In practice, a finer gradation of distance bands may be used. Under existing clinical guidelines for radiotherapy, the tumor would be treated by irradiating the tissue out to the outer boundary of the 10-20mm margin (23), which corresponds to the margin 14 shown in figure 1b.

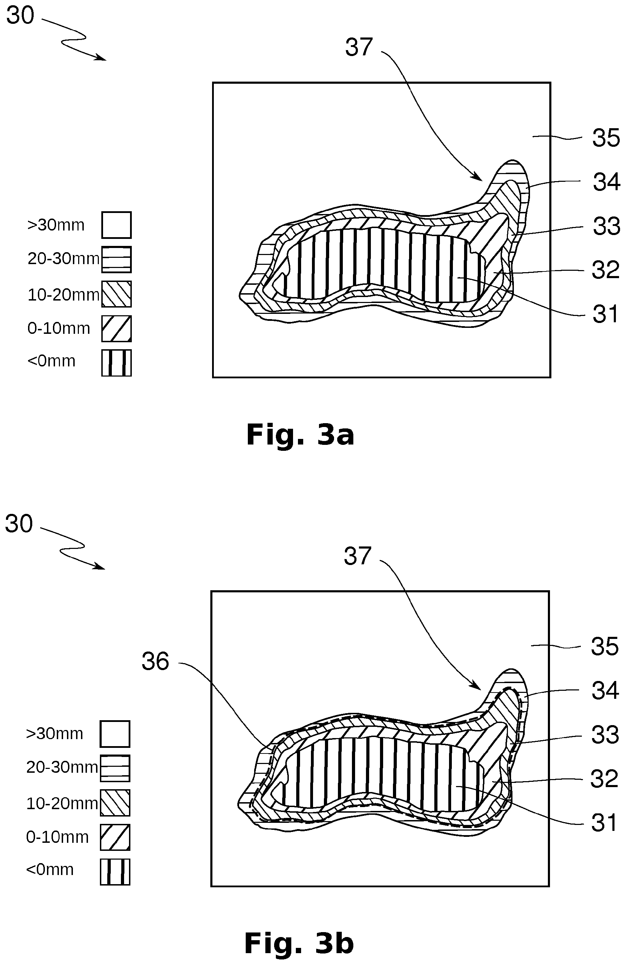

Figures 3a and 3b illustrate the purpose of an Expected Distance to Tumor (EDT) map which can be generated from the segmented sMRI image of figure 1 and spectroscopic (MRSI) image datasets of the same tissue region using techniques described below. The EDT map shows, at each pixel/voxel, what the distance of the pixel/voxel to the tumor boundary is expected to be, based on pattern information (e.g. a feature vector of parameters such as metabolite percentages and/or ratios) derived from the MRSI images, at that pixel/voxel. In the example shown in figures 3a and 3b, it can be seen that the expected <0mm region 31 corresponds approximately to the STV region 11 of figures 1a and 1b and the simple structural 0mm contour 21 of figure 2. The expected 0-10mm, 10-20mm and 20-30mm regions 32, 33 and 34, by contrast, show a deviation, indicated by arrow 37, from the sizes and shapes of the corresponding regions of figure 2. In the region 37, the MRS features of the tissue indicate expected distance values, based on the spectroscopy data, which are significantly smaller than the actual distances to the MRI-visible tumor boundary. This can be taken as an indication, as derived from spectroscopy imaging data, that tumor infiltration is likely to be present in the region 37, and the radiotherapy/surgery treatment margin should be defined to include the outlying region 37, as indicated by the dashed line 36 in figure 3b. In this way, it is possible to define a treatment margin 36 which, instead of being defined conservatively, as in figure 1b, by attempting to include all infiltrated tissue in most cases, uses information from spectroscopy (and optionally other sources) to include infiltrated tissue further away from the STV boundary where necessary. This in turn may permit the default margin (previously e.g. 20mm) to be set less conservatively (e.g. with a base value of 15mm or 10mm), while still including all the likely tumor-infiltrated tissue.

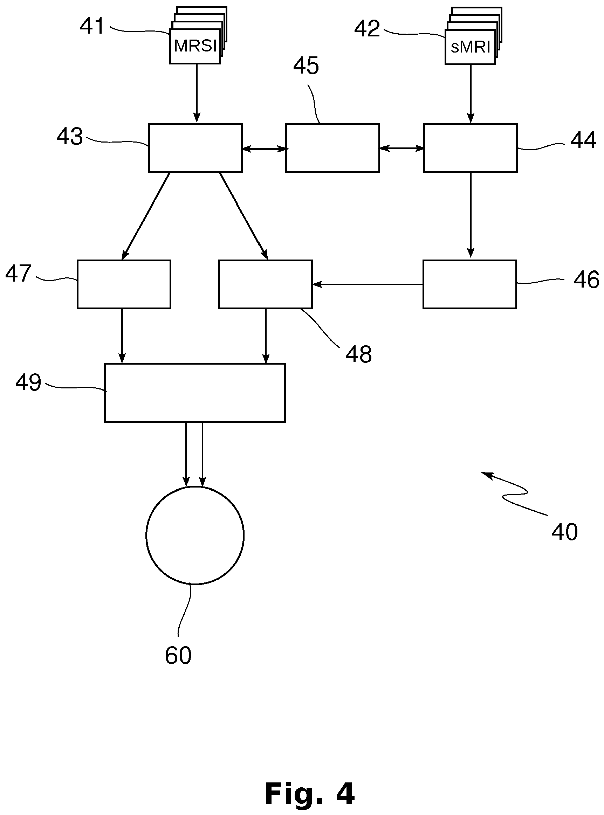

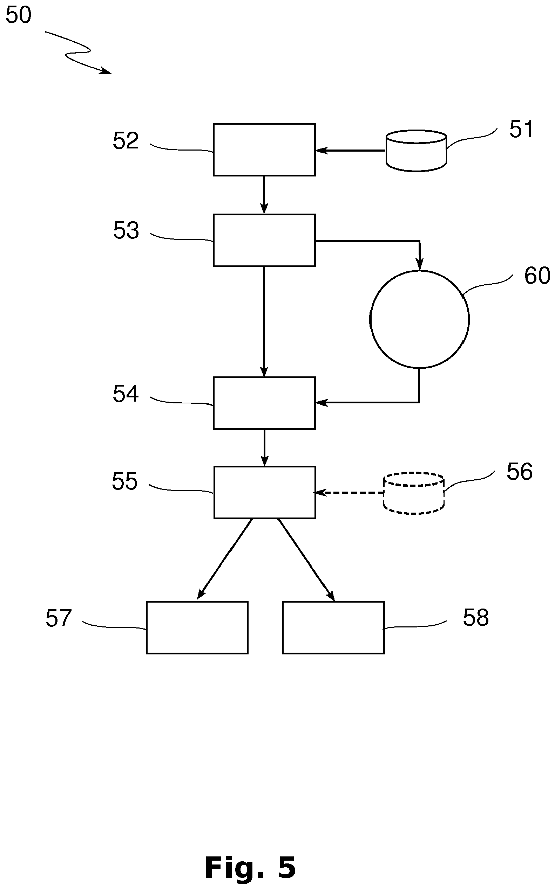

Figure 4 shows an example of a method 40 for training a model 60 for use in the method 50 illustrated in figure 5. Training datasets comprising MRSI imaging datasets 41 and corresponding sMRI imaging datasets 42 are acquired 43, 44 and registered 45. At step 46, the tumor boundary (or other reference point or region, depending on the application) is detected in the training sMRI image datasets. The sMRI image can be segmented into: white-matter (WM), gray-matter (GM), cerebral-spinal-fluid (CSF), edema, non-enhancing tumor (NE-Tumor), enhancing tumor (E-Tumor) and necrosis, for example, and the Solid Tumor Volume (STV) can be defined as the union of NE-Tumor, E-Tumor, and necrosis, for example. Segmentation can be performed fully automatically using an algorithm such as BraTumIA, which is a machine learning-based segmentation method trained for example on an independent dataset of many pre- and postoperative MRI images of GBM manually segmented by experienced neuroradiologists. Automatic segmentation can be carried out using the modalities $T_1$, $T_{1c}$, $T_2$, and FLAIR as input, for example.

While sMRI has been described above for determining the reference feature (tumor boundary), an alternative technique could be used if it generates an image dataset which permits the determination of the reference feature and which corresponds to the training MRSI dataset.

In step 47, the feature parameters (e.g. metabolite ratios) are extracted from the MRSI images, and in step 48 the corresponding distances (e.g. distances-to-tumor) are calculated, using the boundary information calculated in step 46. The feature parameter values from step 47 and the corresponding distance values from step 48 are used by training module 49 to train the model 60. Feature parameters are chosen which can provide, individually or in combination, some information about the quantity of interest, and which can provide, individually or in combination, some information about the expected distance values.

In the simple case, the model 60 may be a mathematical model, or set of mathematical models (e.g. a single-function exponential model per feature) which generalize, by performing regression analysis on each feature for multiple tumors, the variation of the various features (e.g. metabolite ratios) as a function of the distance-to-tumor. Such a model may then be inverted so that it can be used to estimate an expected distance to tumor (EDT) value based on the value of a particular feature value. Alternatively, the model 60 may be implemented as a multivariate regression model, for example using a regression forest algorithm such as Random Forest®. Such a regression model can be trained with a multivariate feature set and is capable of generating an EDT value from a multidimensional feature vector. A regression forest can be trained to predict the distance to solid tumor based on the metabolite values and/or ratios of a single spectrum/voxel. Tissue regions which share similar metabolic features as the ones found near the solid tumor visible in sMRI are likely candidates to find tumor infiltration, regardless of their real distance to the STV. Various types of MRS features may be used. For example, the percentages of particular metabolites, calculated as the ratio between the area of a given metabolite and the total sum of the areas of all metabolites, or conventional ratios between the areas of two metabolites. By way of example, one or more of the following fourteen MRS features may be used: %NAA, %Cho, %Cr, %Glx, %Lac, %Lip, Cho/Cr, Cho/NAA, Glx/NAA, Glx/Cr, Lac/Cr, Lip/Cr, Lac/NAA and Lip/NAA where *%metabo-*

*lite*, can be calculated as the ratio between the area of a given metabolite and the total sum of the areas of all metabolites, and the remaining features as the ratios between the areas of two metabolites (NAA=N-Acetyl-Aspartate, Cho=Choline, Cr=Creatine, Glx=Glutamine+Glutamate, Lac=Lactate, Lip= 1.3 and 0.9 ppm resonances of Mobile Lipids). Using the %metabolite values has the advantage that it provides additional pattern information (metabolite correlated against all the the metabolites instead of against just one). The regression forest is preferably trained to estimate the distance to tumor based on all (fourteen in this case) of the available features. The training may comprise a k-fold (e.g. k=10) cross-validation scheme for performance evaluation purposes.

In the example of the fourteen features mentioned above, experimental results for GBM tumors show that the curves describing the features as a function of the distance to the STV typically resemble an exponential shape. Therefore, the behavior of the different MRS features as a function of the distance to the STV can be described by the following MRS-Feature Spatial Distribution (MRS-FSD) model:

$$x_i(d) = K + A\, e^{\frac{-d}{\lambda}},$$ where d is the distance and K, A and $\lambda$ are the model parameters. In this expression, K represents the value of the feature i when the distance to the tumor approaches infinity ($K=x_i(d=\infty)$). The fit parameter A (amplitude) represents the difference between the values found in the STV and the values found in regions far from the STV ($A=x_i(d=0)-x_i(d=\infty)$). The distance parameter $\lambda$ controls the characteristic rate by which the parameter normalizes as the distance to the tumor increases. Spectroscopic features that change the surrounding tissue over a larger spatial distance to the tumor are associated with larger values of $\lambda$.

The MRS-FSD can be used to compare the difference in behavior of the different MRS features as a function of the distance to the STV. To facilitate the comparison between different features, the values of each feature can be rescaled using an expression of the form

$$x_i' = \frac{x_i - {}^H\tilde{X}_i}{{}^H X_i^{99.9} - {}^H\tilde{X}_i},$$ where ${}^H\tilde{X}_i$ and ${}^H X_i^{99.9}$ correspond respectively to the median value and the 99.9th percentile of the same feature in healthy subjects, and $x_i$ and $x_i'$ correspond to the value of the feature in GBM patients before and after rescaling. The rescaling enables direct comparison of the different model parameters between different MRS features. Considering this MRS-FSD model, the Expected Distance to Tumor, expressed as a function of the value of the feature i, may take the

form $d(x_i) = \lambda \cdot \log\left(\frac{A}{x_i - K}\right), \frac{A}{x_i - K} > \varepsilon$ and

$d(x_i) = \lambda \cdot \log(\varepsilon), \frac{A}{x_i - K} \leq \varepsilon$, where $\varepsilon$ is an arbitrary small number, e.g. 0.001 (this prevents problems with close to 0 and negative arguments of the logarithm function, and sets the maximum expected distance that can be predicted using this model).

For the multivariate regression model, trained regressors may be used to evaluate which features carry the most relevant information for estimating EDT values. This can be performed, for instance, using conventional measures of feature importance intrinsic to the regression forests, such as the increase in Mean Squared Error (MSE) after feature permutation. Features which lead to a greater increase in MSE after permutation are deemed more important.

Experimental EDT maps show that the features with the smallest λ values, Lip/Cr and Cho/Cr, carry the least information for the prediction of the distance to the STV. This is to be expected, namely in the case of the Lip/Cr ratio, since lipid signals normally do not originate from the peritumoral region. The higher model complexity of the regression forest and the fact that it includes the information from all features leads to considerably more detailed maps.

The above method has been described using metabolite percentage and ratio parameters as EDT predictors. Of these, Cho/NAA, %NAA and Glx/NAA have been found to be particularly pertinent. Other parameters may be used instead, or in addition, such as perfusion or diffusion (peritumoral regions with active tumor cell proliferation promote angiogenesis and are usually hyperfused, for example).

Figure 5 shows an example of how an EDT map can be generated from an MRS imaging dataset 51 of a tumor. The method 50 assumes the availability of a model 60 which characterizes the spatial variation in the MRS features as a function of distance from a reference feature (in this case the tumor boundary). However, the model is used in reverse. In other words, it is used to estimate the distance of the image element from the tumor boundary, in dependence on the values of the MRS-derived features.

In step 52, an MRS imaging dataset 51 of a tumor is acquired. In step 53, one or more MRS-derivable features, such as metabolite amounts or ratios, are calculated for each MRSI image element, and the MRS features are applied as a predictor feature vector to a model 60, which generates an Expected Distance to Tumor (EDT) value for the image element. The feature set extracted in step 53 comprises the same features as the feature set used to train the model 60, i.e. the same features as those extracted in step 47. In step 54, the EDT values from the model are obtained from the model 60 and passed on for rendering 57 on an EDT map for visualization by the clinician, for example, or they may be used for controlling or programming, 58, computer aided diagnostic or therapy or surgery tools. Optionally, the EDT map may be interpreted together with other medical imaging data 56, in which case the complementary data can be acquired and registered to the EDT map in step 55. In addition to the EDT map, the registration step 55 may also include information from dataset 51, from which the features required to generate the EDT map were retrieved in step 53.

The distance to tumor measurement may for example be standardized as the shortest distance to the STV boundary, along a direction perpendicular to the boundary. The distance may be calculated as the Euclidean distance, for example. Alternatively, in situations where the relationship between the QoI and the distance has a directionality component, the directionality may be taken into account when calculating the distance. If the QoI is tumor infiltration, and the infiltration occurs strongly along white matter tracts, for example, or avoiding bony structures, then the distance may be calculated along the white matter tracts, or around the bony structures, instead of as a straight Euclidean distance in space. In this case, additional information would be required when calculating EDT values (step 48 in figure 4) for training the model 60, so as to define the spatial constraints of the distance metric.

Note that the model 60 can also be used for mapping or determining the QoI in MRS images of tissue which does not necessarily include a the reference feature (e.g. STV boundary) which was used to determine the EDT values for training the model. In fact the model 60 can be used with any image for which the same feature parameter set can be extracted which was used to generate the model 60.

While the method has been described with reference to its particular application to MRS-derived features of tissue in a peritumoral region of a tumor, the EDT technique can be applied in other imaging fields in which there is a correlation between a quantity of interest and the distance from a reference point or image region, but where the correlation can be improved by incorporating correlation information from other available parameters.

In a first practical example of such a different field of application, the quantity of interest may be the number of species in shallow waters around a particular coastline. The number of species is known to correlate generally with the distance from the shore. It also correlates with other parameters of coastal waters, such as water temperature, depth, pollutant concentration, tidal movement etc. which can be derived from infrared satellite imagery, for example. A machine learning (regression) model is trained to predict values of these parameters at each image element as a function of its distance from the shore. The model is then inverted and used to estimate, for each image element, an expected distance to the shore, based on parameter data from the IR images. The expected distance to shore values can then be used to classify the image elements according to the expected distance to shore (and thereby the number of species), and to render the information on an expected distance map.

In a second practical example, the quantity of interest may be the strength of steel in the vicinity of a weld. A conventional X-ray of the weld may show a well-defined structural boundary of the weld, but it is known that the strength of the steel is adversely affected for some distance outside this boundary, and that parameters such as the density of microcrystalline grain boundaries, dopant distribution and surface discoloration of the steel correlate with the local steel strength. A model is trained using experimental data relating these parameters to the distance from the weld boundary, and the model is then used in reverse to estimate the expected distance to the weld boundary, based for example on an X-ray diffraction dataset, chromatographic microscopy of the metal surface or other suitable techniques for measuring or deriving values of the various parameters mentioned. A strength map can then be created using the expected distance values to indicate the estimated extent to which the steel in each local region near the weld has been weakened.

Various references to patterns and pattern recognition are made in this text. The feature vector used for predicting the EDT (or equivalent expected distance value in other applications) may be thought of as a pattern, and the expected distance value may be thought of as a pattern recognition result. Patterns may represent the QoI more or less strongly, and the expected distance value provides a way of "recognizing" (i.e. quantifying) the QoI on the basis of the feature set patterns, and optionally rendering the QoI on a map.

The cited examples have described situations in which the expected distance values are calculated with reference to the boundary of a region (e.g. tumor STV, coastline, weld boundary). However, the expected distances may be calculated using a point as a reference. In a more complex calculation, multiple points and/or boundaries could be taken as the reference for calculating the expected distance values. Boundary conditions or other constraints may be included in the calculation (as mentioned in relation to white matter tracts above).

The cited examples have also described situations in which the expected distance is external to the region (e.g. STV etc) boundary. However, the expected distance value may be negative, representing the occurrence of a QoI pattern which is expected to occur inside the boundary, i.e. a Signed Distance Function (SDF) may be used. In the case of a brain tumor, negative distances may be associated with tumor necrosis, for example. If an SDF is used, the EDT map may show negative distance values at points inside or outside the STV.

Moreover, for the purpose of training the model 60, fictitious distances may be attributed to particular regions of the image. For instance, in the example of infiltrative tumors, fictitious negative distances may be used to identify inner compartments of the tumor (e.g. for non-enhancing tumor, enhancing tumor and necrosis, 0, -1mm and -2mm may be used instead of their real distances to the contour). In this case, negative EDT values may provide a fuzzy segmentation of the inner compartments of the tumor at the same time that positive distances provide an indirect measure of tumor infiltration. Similarly, for training model 60, the measured distance to the tumor may be substituted with predetermined 'indicator' values, such as very large distances to the tumor, in regions where tumor infiltration is very unlikely (in tumors that do not infiltrate bone tissue, bone tissue may be labeled with a large distance to the tumor, for example). Fictitious indicator distances for training the model 60 may be used to enable the method to output EDT values that are better representations of one or more quantities of interest (e.g. tumor infiltration and tumor necrosis).

**Claims**

1.  A computer-implemented method (40) of generating a model (60) for, based on a feature vector comprising one or more feature parameters of an image element of an imaging dataset under analysis (51), estimating a quantity of interest at the image element,
    **characterized by**:

    a first step (43, 44, 45) of providing at least one reference imaging dataset (41, 42) comprising a plurality of reference image elements,
    a second step (47) of determining values of the said feature parameters at each of said reference image elements,
    a third step (46) of determining a reference point or region in the reference imaging dataset,
    a fourth step (48) of, for each reference image element, determining its distance from the reference point or region,
    a fifth step (49) of using the feature parameter values determined for the reference image elements in the second step and the distances determined for the reference image elements in the fourth step to generate a model (60) for, based on the said feature vector, determining an expected distance value for the image element of the imaging dataset under analysis.

2.  Method according to claim 1, wherein the feature parameters are selected as predictors of the quantity of interest, such that the expected distance value determined by the model (60) represents a magnitude of the quantity of interest.

3.  Method according to one of claims 1 or 2, wherein the model (60) is a machine learning model, and the fifth step comprises using a regression forest algorithm to train the model (60).

4. Method according to one of claims 1 to 3, wherein the distance values are determined in the fourth step by calculating or deriving the shortest Euclidean distance from the reference image element to the reference point or region, and/or wherein the distance values are expressed as a signed distance function.

5. Method according to one of claims 1 to 4, comprising a step of configuring the model (60) to, if the feature vector of an image element matches a predetermined criterion, assign a predetermined value to the expected distance for the said image element.

6. Method according to one of claims 1 to 5, wherein:

the or each reference image dataset comprises a first reference image dataset (41) and a second reference image dataset (42), wherein the first and second reference image datasets comprise different imagings of substantially the same imaged content,
the second step (47) uses the first reference image dataset (41), and the third step (46) uses the second reference image dataset (42),
the method further comprises a step of registering the first reference imaging dataset with the second reference imaging dataset.

7. Method according to claim 6, wherein the or each first reference imaging dataset (41) comprises an MRSI dataset and/or wherein the or each second reference imaging dataset (42) comprises an sMRI dataset.

8. Method according to one of claims 1 to 7, wherein the reference region represents a boundary of a tumor, and the imaged content comprises a peritumoral and/or interior region of the tumor.

9. Method according to claim 8, wherein the quantity of interest is a degree of tumor infiltration.

10. Method according to one of claims 8 or 9, wherein the feature parameters comprise one or more metabolite amounts or ratios, in particular one or more of %NAA, %Cho, %Cr, %Glx, %Lac, %Lip, Cho/Cr, Cho/NAA, Glx/NAA, Glx/Cr, Lac/Cr, Lip/Cr, Lac/NAA and Lip/NAA.

11. Method according to one of claims 8 to 10, wherein the feature parameters include one or more metabolite proportions, in particular one or more of %NAA, %Cho, %Cr, %Glx, %Lac and %Lip.

12. A computer-implemented method (50) of estimating, based on a feature vector comprising one or more feature parameters at an image element of an imaging dataset under analysis (51), a quantity of interest at the image element,
**characterized by**:

determining (53) values of the feature parameters at the image element,
providing a model (60) generated by a method (40) according to one of claims 1 to 11 for, based on the said feature parameters, estimating an expected distance value representing the quantity of interest,
using (54) the model (60) to determine the expected distance value for said each image element.

13. Method according to claim 12, comprising using the estimated expected distance values to generate (57) a map representing the quantity of interest in the imaging dataset (51) and/or to generate (58) a control program.

14. Method according to one of claims 12 or 13, wherein the imaging dataset (51) comprises an image of a tumor, and wherein the method comprises using the expected distance values to classify image elements by a cancer tissue state, the state including one or more of non-enhancing tumor, enhancing tumor, infiltrated, non-infiltrated and necrosis.

15. Computer program product comprising computer-executable instructions for performing a method according to one of claims 1 to 14, or for implementing a model generated according to one of claims 1 to 11, wherein the instructions are stored in a non-volatile storage medium.

**Fig. 1a** *(prior art)*

**Fig. 1b** *(prior art)*

**Fig. 2**

**Fig. 3a**

**Fig. 3b**

41 — MRSI

42 — sMRI

45

43 — [box] ↔ [box 45] ↔ [box] — 44

47 — [box]    [box] ← [box] — 46

48

49 — [box]

60

40

**Fig. 4**

**Fig. 5**

Europäisches
Patentamt

European
Patent Office

Office européen
des brevets

# EUROPEAN SEARCH REPORT

Application Number

EP 18 15 1868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAO YAOZONG ET AL: "Learning Distance Transform for Boundary Detection and Deformable Segmentation in CT Prostate Images", 14 September 2014 (2014-09-14), ECCV 2016 CONFERENCE; [LECTURE NOTES IN COMPUTER SCIENCE; LECT.NOTES COMPUTER], SPRINGER INTERNATIONAL PUBLISHING, CHAM, PAGE(S) 93 - 100, XP047298875, ISSN: 0302-9743 ISBN: 978-3-319-69952-3 | 1-5,8,9, 12,13,15 | INV. G06T7/00 |
| A | * abstract * * page 94, last paragraph * * Section 2 Method; page 95 - page 97 * | 6,7,10, 11,14 | |
| X | JUN CHENG ET AL: "Enhanced Performance of Brain Tumor Classification via Tumor Region Augmentation and Partition", PLOS ONE, vol. 10, no. 10, 8 October 2015 (2015-10-08), pages 1-13, XP055473034, DOI: 10.1371/journal.pone.0140381 | 1,8,15 | |
| Y | * abstract * * Section Pipeline of BoW-based tissue classification; page 4 * * Section Tumor region augmentation and partition; page 5 * | 6,7,10, 11,14 | |

TECHNICAL FIELDS
SEARCHED      (IPC)

G06T

-/--

The present search report has been drawn up for all claims

| Place of search | Date of completion of the search | Examiner |
|---|---|---|
| Munich | 7 May 2018 | Rusu, Alexandru |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

page 1 of 2

| Europäisches Patentamt<br>European Patent Office<br>Office européen des brevets | EUROPEAN SEARCH REPORT | Application Number<br>EP 18 15 1868 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | QIANG WANG ET AL: "Classification of brain tumors using MRI and MRS data", PROCEEDINGS OPTICAL DIAGNOSTICS OF LIVING CELLS II, vol. 6514, 8 March 2007 (2007-03-08), pages 1-8, XP055473043, US ISSN: 0277-786X, DOI: 10.1117/12.713544 ISBN: 978-1-5106-1723-0 * abstract * * first two paragraphs; page 2 * * Section 2. Methodology; page 2 - page 5 * * figure 1 *<br>----- | 6,7,10, 11,14 | |

|  |  |  | TECHNICAL FIELDS SEARCHED (IPC) |
|---|---|---|---|

The present search report has been drawn up for all claims

| Place of search | Date of completion of the search | Examiner |
|---|---|---|
| Munich | 7 May 2018 | Rusu, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140148679 A1
- WO 2009058915 A1